# EUROPEAN PATENT SPECIFICATION

(11) **EP 4 395 343 B1**
(45) Date of publication and mention of the grant of the patent: **18.11.2026**
(21) Application number: 22860436.9
(22) Date of filing: 22.08.2022
(51) Int. Cl.: H04N 23/00, G02B 7/10, G02B 7/02, G02B 7/08

(54) **CAMERA MODULE AND ELECTRONIC APPARATUS**
KAMERAMODUL UND ELEKTRONISCHE VORRICHTUNG
MODULE DE CAMÉRA ET APPAREIL ÉLECTRONIQUE

(30) Priority: 27.08.2021 CN 202110997105
(43) Date of publication of application: 03.07.2024
(73) Proprietor: Vivo Mobile Communication Co., Ltd., Dongguan, Guangdong 523863 (CN)
(72) Inventor: CHEN, Guanglong, Dongguan, Guangdong 523863 (CN); CHENG, Dongcun, Dongguan, Guangdong 523863 (CN); QUE, Haibo, Dongguan, Guangdong 523863 (CN); LIN, JianTang, Dongguan, Guangdong 523863 (CN)
(74) Representative: Lavoix
(86) International application number: PCT/CN2022/113912
(87) International publication number: WO 2023/025090

(56) References cited:
- CN-A- 111 147 721
- CN-A- 111 212 216
- CN-A- 112 526 700
- CN-A- 112 526 700
- CN-A- 113 109 918
- CN-B- 111 147 721
- JP-A- 2013 020 128
- US-A1- 2017 351 164
- US-B2- 9 684 147

## Description

### TECHNICAL FIELD

This application pertains to the field of camera technologies and specifically relates to a camera module and an electronic device.

### BACKGROUND

Nowadays, with the constant improvement of camera technologies of electronic devices, people wish to shoot images of higher quality using electronic devices.

In an actual shooting process, an object being shot can be magnified using optical zoom. The object being shot can be magnified by changing a distance between a lens and the object being shot using optical zoom, so the lens needs to move during a zoom process. To implement movement of the lens, a fitting protrusion can be provided on one lens barrel and a sliding slot can be provided on the other lens barrel, and the fitting protrusion is in sliding fit with the sliding slot to implement relative movement between the two lens barrels, and ultimately implement the movement of the lens.

However, when a user uses an electronic device, a camera module in a stretching state is easily subjected to a pressure due to falling, collision, and artificial press. Under the action of such pressure, lens barrels of the camera module exhibit a trend of retracting, yet a drive source for outputting a drive force in the camera module does not work, so the lens barrels are unable to retract. This leads to mutual extrusion of the lens barrels at fitting protrusions, such that the fitting protrusions are easily damaged, and therefore such camera module has short service life. Document JP2013020128A discloses lens barrel and imaging appartus including the same.

### SUMMARY

Embodiments of this application are intended to provide a camera module and an electronic device, so as to solve the problem of short service life of the camera module.

To resolve the foregoing technical problem, this application is implemented as follows.

According to a first aspect, an embodiment of this application provides a camera module including a photosensitive chip, a first lens barrel, a first lens, a rotating assembly, an elastic member, and a drive mechanism.

The first lens barrel is provided with the first lens, the first lens is disposed opposite the photosensitive chip, the rotating assembly sleeves the first lens barrel, and the first lens barrel is connected to the rotating assembly via a first fitting convex portion and a first spiral guide slot.

The rotating assembly includes a body member and a transmission member that are disposed separately, a first end of the elastic member is connected to the body member, a second end of the elastic member is connected to the transmission member, and the drive mechanism is connected to the transmission member.

The drive mechanism drives, via the transmission member, the elastic member, and the body member in turn, the first lens barrel to move along a first direction with fitting of the first fitting convex portion and the first spiral guide slot, the first direction being a direction approaching or leaving the photosensitive chip.

In a case that the first lens barrel is subjected to an external force, the elastic member makes the first lens barrel move along a direction approaching the photosensitive chip.

According to a second aspect, an embodiment of this application provides an electronic device including the foregoing camera module.

In the embodiments of this application, when the camera module requires zooming, the drive mechanism drives, via the transmission member, the elastic member, and the body member in turn, the first lens barrel to move along the first direction with fitting of the first fitting convex portion and the first spiral guide slot, so as to drive the first lens to leave or approach the photosensitive chip; and when the camera module in a stretching state is subjected to a pressure due to falling, collision, artificial press, and other situations, the first lens barrel drives the body member to rotate, then the body member applies a pressure to the elastic member, causing the elastic member to deform, while the transmission member can keep still. The elastic member can convert dynamic potential energy, generated by the camera module under pressure, into its own elastic potential energy, thereby providing buffering, so that the first fitting convex portion is not prone to breakage due to extrusion. Therefore, these embodiments can solve the problem of short service life of the camera module.

### BRIEF DESCRIPTION OF DRAWINGS

FIG. 1 is an exploded view of a camera module disclosed in a first embodiment of this application;
FIG. 2 and FIG. 3 are schematic structural diagrams of the camera module disclosed in the first embodiment of this application in different states;
FIG. 4 is an exploded view of a camera module disclosed in a second embodiment of this application;
FIG. 5 is a cross-sectional view of the camera module disclosed in the second embodiment of this application; and
FIG. 6 and FIG. 7 are schematic structural diagrams of the camera module disclosed in the second embodiment of this application in different states.

### Description of reference signs:

100. first lens barrel;
200. rotating assembly; 210. body member; 211. guide slot; 212. first action portion; 213. third action portion; 214. third spiral guide slot; 215. second limiting straight slot; 220. transmission member; 221. third end; 222. fourth end; 223. rack portion; 224. rod portion; 225. guide portion; 226. second action portion; 227. first support convex portion; 228. second support convex portion; 240. mounting member;
300. second lens barrel;
400. elastic member;
500. first lens;
600. base;
700. drive lens barrel; 710. third fitting convex portion; and 720. third limiting straight slot.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, in this specification and claims, "and/or" indicates at least one of the connected objects, and the character "/" generally indicates an "or" relationship between the contextually associated objects.

The following describes in detail the camera module and electronic device provided in the embodiments of this application through specific embodiments and application scenarios thereof with reference to the accompanying drawings.

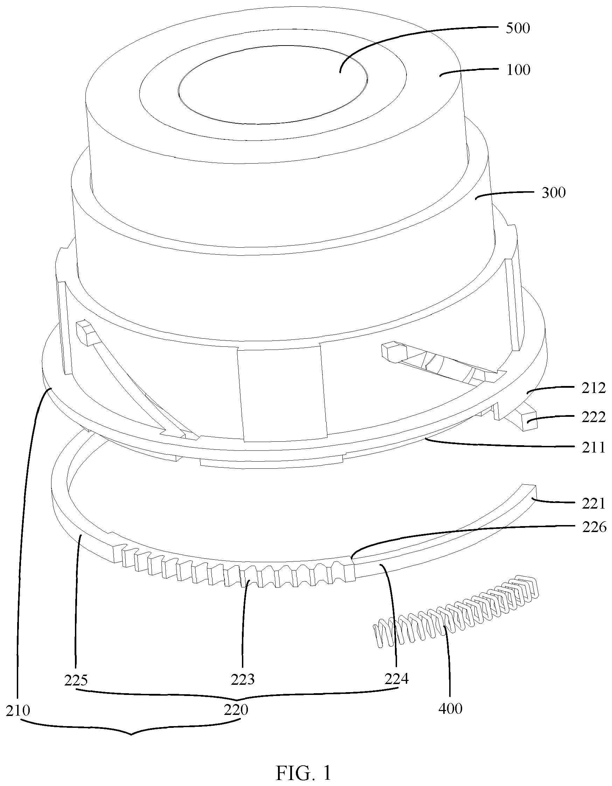

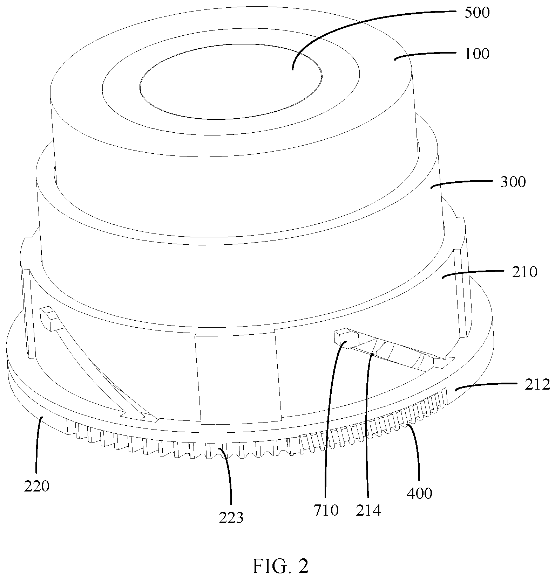

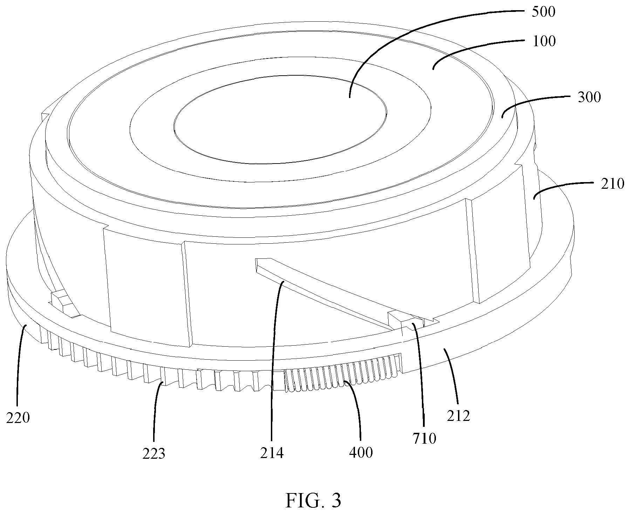

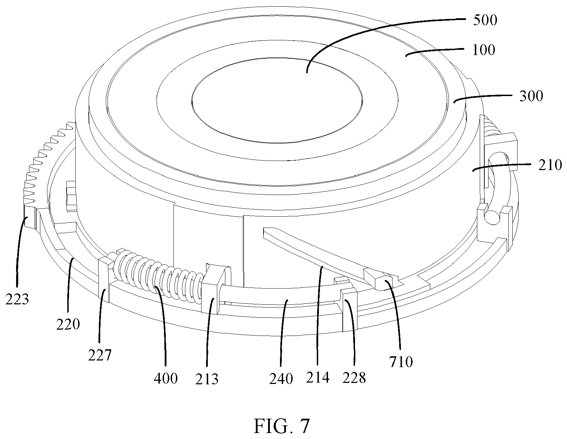

As shown in FIG. 1 to FIG. 7, an embodiment of this application provides a camera module. The camera module includes a base 600, a photosensitive chip, a first lens barrel 100, a first lens 500, a rotating assembly 200, an elastic member 400, and a drive mechanism.

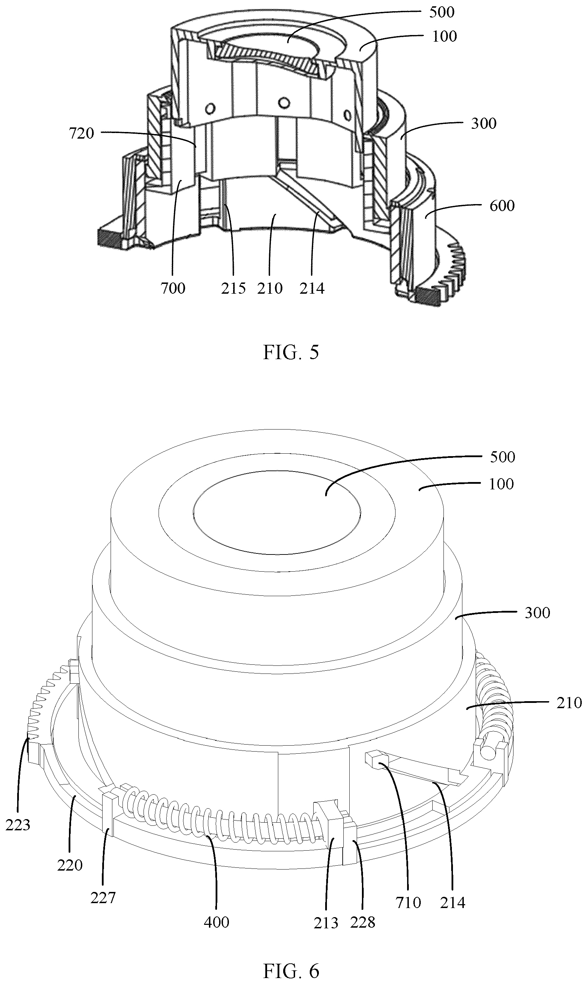

The photosensitive chip is disposed in the base 600, and the base 600 may be provided with other components of the camera module in addition to the photosensitive chip. In addition, the base 600 may include other parts in addition to the parts shown in FIG. 5. The first lens barrel 100 is provided with the first lens 500, the first lens 500 is disposed opposite the photosensitive chip, and the first lens 500 and the photosensitive chip may be disposed along an optical axis direction of the camera module. The photosensitive chip may be configured to receive light emitted through the first lens 500 and ultimately convert an optical signal into a digital image signal, so as to obtain an image.

The rotating assembly 200 sleeves the first lens barrel 100, and the first lens barrel 100 is connected to the rotating assembly 200 via a first fitting convex portion and a first spiral guide slot. The rotating assembly 200 includes a body member 210 and a transmission member 220 that are disposed separately, a first end of the elastic member 400 is connected to the body member 210, and a second end of the elastic member 400 is connected to the transmission member 220. Optionally, of the body member 210 and the first lens barrel 100, one is provided with the first fitting convex portion and the other is provided with the first spiral guide slot, so that the body member 210 can directly drive the first lens barrel 100 to stretch and retract. Since the body member 210 and the transmission member 220 are disposed separately, movements of the two can be separate. In other words, the transmission member 220 can transfer a drive force to the body member 210 via the elastic member 400, causing the body member 210 to rotate, and when the transmission member 220 transfers no drive force to the body member 210, the body member 210 can rotate with respect to the transmission member 220 under the action of an external force. Optionally, the elastic member 400 may be a spring, and the elastic member 400 and the body member 210 may just abut against each other, or may be connected through welding, snap-fitting, or the like. Similarly, the elastic member 400 and the body member 210 may just abut against each other, or may be connected through welding, snap-fitting, or the like. In addition, a cross section of the elastic member 400 may be the same in shape as a portion, of the transmission member 220, where the elastic member 400 is disposed. For example, the cross section of the elastic member 400 may be circular, rectangular, triangular, or the like. This is not limited in this embodiment of this application.

The drive mechanism is connected to the transmission member 220, and the drive mechanism drives, via the transmission member 220, the elastic member 400, and the body member 210 in turn, the first lens barrel 100 to move along a first direction with fitting of the first fitting convex portion and the first spiral guide slot, the first direction being a direction approaching or leaving the photosensitive chip. Optionally, the drive mechanism herein may include components such as a motor and a transmission gear. When the drive mechanism outputs a drive force, the transmission member 220 rotates under the action of this drive force, the transmission member 220 drives the body member 210 to rotate via the elastic member 400, and with fitting of the first fitting convex portion and the first spiral guide slot, the first lens barrel 100 can move along a direction leaving the photosensitive chip, thereby causing the first lens barrel 100 to stretch out. When the drive mechanism outputs a reversed drive force, the transmission member 220 drives the body member 210 to rotate via the elastic member 400, and with fitting of the first fitting convex portion and the first spiral guide slot, the first lens barrel 100 can move along a direction approaching the photosensitive chip, thereby causing the first lens barrel 100 to retract.

The foregoing describes the process of the drive mechanism driving the first lens barrel 100 to move. When the first lens barrel 100 is in a stretching state, once the first lens barrel 100 is subjected to an external force, the first lens barrel 100 exhibits a trend of retracting, in which case although the drive mechanism does not work, the first lens barrel 100 can still move due to the presence of the elastic member 400, that is, in a case that the first lens barrel 100 is subjected to an external force, the elastic member 400 makes the first lens barrel 100 move along the direction approaching the photosensitive chip. Specifically, if the first lens barrel 100 exhibits a trend of moving along the direction approaching the photosensitive chip, the first lens barrel 100 can drive the body member 210 to rotate, and the body member 210 further drives one end of the elastic member 400 to move. Since the other end of the elastic member 400 is connected to the transmission member 220 and the transmission member 220 does not move, the elastic member 400 deforms, thereby absorbing the external force on the first lens barrel 100. After the external force on the first lens barrel 100 disappears, the elastic member 400 resumes from deformation, so that the body member 210 drives the first lens barrel 100 to reset to the stretching state. In this way, the camera module can continue to work with the first lens barrel 100 stretching out, without the need for the drive mechanism to drive the first lens barrel 100 to stretch out again.

In this embodiment of this application, when the camera module requires zooming, the drive mechanism drives, via the transmission member 220, the elastic member 400, and the body member 210 in turn, the first lens barrel 100 to move along the first direction with fitting of the first fitting convex portion and the first spiral guide slot, so as to drive the first lens 500 to leave or approach the photosensitive chip; and when the camera module in the stretching state is subjected to a pressure due to falling, collision, artificial press, and other situations, the first lens barrel 100 drives the body member 210 to rotate, then the body member 210 applies a pressure to the elastic member 400, causing the elastic member 400 to deform, while the transmission member 220 can keep still. The elastic member 400 can convert dynamic potential energy, generated by the camera module under pressure, into its own elastic potential energy, thereby providing buffering, so that the first fitting convex portion is not prone to breakage due to extrusion, and other parts of the camera module are also not prone to an impact force. Therefore, this embodiment can solve the problem of short service life of the camera module.

As mentioned above, the body member 210 can directly drive the first lens barrel 100. In other embodiments, the camera module may further include a second lens barrel 300 and a drive lens barrel 700. The base 600 sleeves at least part of the body member 210, and the base 600 is provided with a second spiral guide slot and a first limiting straight slot. The body member 210 is provided with a third spiral guide slot 214 and a second limiting straight slot 215. The second lens barrel 300 is provided with a second fitting convex portion, where the second fitting convex portion fits with the second spiral guide slot, and the second fitting convex portion also fits with the second limiting straight slot 215 of the body member 210. The drive lens barrel 700 is provided with a third fitting convex portion 710 and a third limiting straight slot 720, where the third fitting convex portion 710 fits with both the third spiral guide slot 214 and the first limiting straight slot. The first lens barrel 100 is provided with the first fitting convex portion, the second lens barrel 300 is provided with the first spiral guide slot, and the first fitting convex portion fits with both the first spiral guide slot and the third limiting straight slot 720. The first limiting straight slot, the second limiting straight slot 215, and the third limiting straight slot 720 herein all extend along the first direction. When the drive mechanism drives the body member 210 to rotate, the second lens barrel 300 rotates and moves along the first direction with fitting of the second fitting convex portion with the second spiral guide slot and fitting of the second fitting convex portion with the second limiting straight slot 215, the drive lens barrel 700 only moves along the first direction with fitting of the third fitting convex portion 710 with the third spiral guide slot 214 and fitting of the third fitting convex portion 710 with the first limiting straight slot, and the first lens barrel 100 only moves along the first direction with fitting of the first fitting convex portion with the first spiral guide slot and fitting of the first fitting convex portion with the third limiting straight slot 720. In this embodiment, both the first lens barrel 100 and the second lens barrel 300 can move along the first direction, so that the first lens 500 has a greater variation range of position with respect to the photosensitive chip, thereby improving a zoom effect of the camera module. When the first lens barrel 100 is subjected to an external force, the first lens barrel 100 moves along the direction approaching the photosensitive chip so as to drive the second lens barrel 300 to rotate and gradually approach the photosensitive chip, the second lens barrel 300 then drives the drive lens barrel 700 to move along the direction approaching the photosensitive chip, and the drive lens barrel 700 then drives the body member 210 to rotate, while the transmission member 220 keeps still.

It should be noted that the solution that the elastic member 400 absorbs an external force disclosed in this embodiment of this application may be applicable to any camera module with a body member 210 and a transmission member 220. This is not limited in this embodiment of this application.

The body member 210 may be an arc-shaped structure with a notch, but the entire center of gravity of the camera module is prone to change when such body member 210 rotates, which results in deteriorated stability of the camera module. In view of this, the body member 210 may be arranged as an annular member, in which case the transmission member 220 and the elastic member 400 are both disposed in a circumferential direction of the body member 210. The elastic member 400 may be designed in correspondence to a local part of the transmission member 220, so that the elastic member 400 is neither too long nor too short, thereby not only guaranteeing elastic deformability of the elastic member 400 but also reducing space occupied by the elastic member 400, so as to facilitate arrangement of other components of the camera module.

In an optional embodiment, as shown in FIG. 1 to FIG. 3, the transmission member 220 has a third end 221 and a fourth end 222, the third end 221 and the fourth end 222 being apart from each other, to be specific, the transmission member 220 is not a closed annular structure but is instead an arc-shaped component with a notch, and due to the presence of the notch, the elastic member 400 can sleeve the transmission member 220 through the notch. In this embodiment, the transmission member 220 adopts a rod component with a relatively simple structure, and the elastic member 400 can directly sleeves the transmission member 220. In this way, in this embodiment, the structure and assembly of the camera module can be simplified, the processing costs of the camera module can be reduced, and the camera module can have more space for arranging other components.

The transmission member 220 may be entirely disposed outside the body member 210. In another optional embodiment, the body member 210 is provided with a guide slot 211 and a first action portion 212, where the guide slot 211 may extend along the circumferential direction of the body member 210, the transmission member 220 fits with the guide slot 211, the first action portion 212 is connected to the first end of the elastic member 400, and a portion of the transmission member 220 is disposed between a side wall of the guide slot 211 and the first action portion 212. When the first lens barrel 100 is subjected to an external force, the body member 210 rotates relative to the transmission member 220, and at this time, the guide slot 211 fits with the transmission member 220 to provide a guiding effect, so that the body member 210 rotates more smoothly. In addition, the first action portion 212 may apply a force to the elastic member 400 to drive the elastic member 400 to deform. In this embodiment, at least a portion of the transmission member 220 is accommodated in the guide slot 211, allowing the transmission member 220 to take up less extra space, and thus facilitating arrangement of other components of the camera module.

Optionally, the transmission member 220 may include a rack portion 223 and a rod portion 224, where the rack portion 223 is connected to the drive mechanism, the rack portion 223 is provided with a second action portion 226 at an end, and the second end of the elastic member 400 is connected to the second action portion 226. In this embodiment, the structure of the rack portion 223 is directly utilized to implement the connection between the transmission member 220 and the elastic member 400, without the need for additionally providing a component to implement the connection between the transmission member 220 and the elastic member 400, thereby simplifying the structure of the camera module, and also facilitating layout of the components of the camera module. In addition, when the body member 210 is provided with the guide slot 211 and the first action portion 212, the guide slot 211 may be provided with an avoidance notch on a side facing away from an optical axis of the first lens 500, and the avoidance notch can avoid the rack portion 223, so that the drive mechanism can be connected to the rack portion 223.

Further, the transmission member 220 further includes a guide portion 225, where the guide portion 225 is connected to the rod portion 224 via the rack portion 223, and the guide portion 225 can fit with the guide slot 211, so as to further enhance smoothness and stability of the body member 210 during rotation.

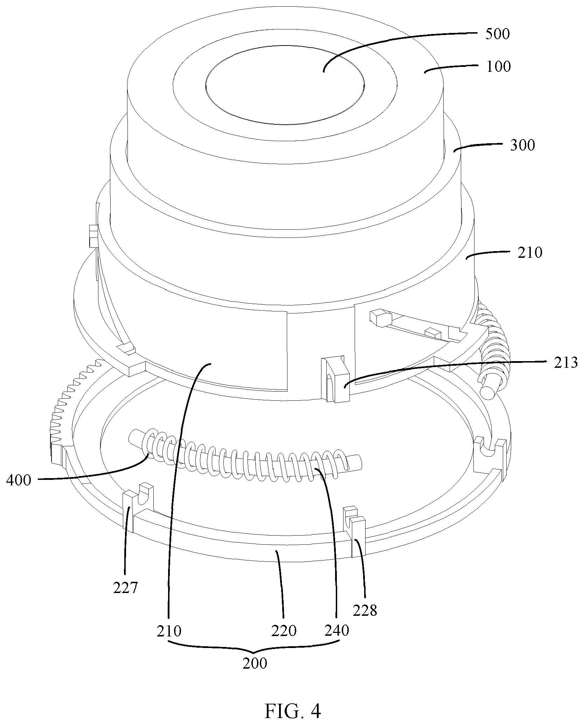

In another optional embodiment, as shown in FIG. 4 to FIG. 6, the rotating assembly 200 further includes a mounting member 240, the mounting member 240 and the transmission member 220 are disposed separately and connected to each other, and the elastic member 400 sleeves the mounting member 240. In this embodiment, the second end of the elastic member 400 is connected to the transmission member 220 via the mounting member 240. Since the elastic member 400 can be mounted via the additionally provided mounting member 240, the structural design of the elastic member 400 is not likely to be limited by the transmission member 220, and therefore the elastic member 400 can be more flexibly arranged, allowing the elastic member 400 to have stronger capability of absorbing an external force. Optionally, the mounting member 240 may be an arc-shaped rod component, facilitating mounting of the elastic member 400.

Further, the transmission member 220 may be arranged as an annular member, making the camera module more stable during telescopic movement. In addition, the annular transmission member 220 has higher structural strength, which not only facilitates transfer of a drive force output by the drive mechanism but the transmission member 220 can also withstand a force exerted by the elastic member 400, preventing such force from causing damage to the transmission member 220 and the drive mechanism. In this embodiment, the transmission member 220 may likewise include a rack portion 223, where the rack portion 223 may be disposed at a local part of the transmission member 220, or may be arranged in an annular shape. This is not limited in this embodiment of this application.

The elastic member 400 may be disposed on an inner side or outer side of the transmission member 220. To be specific, the elastic member 400 and the transmission member 220 may be arranged along a direction perpendicular to the optical axis of the camera module. In another embodiment, the transmission member 220 and the elastic member 400 are arranged along a direction parallel to the optical axis of the camera module. As space on the inner side and outer side of the transmission member 220 is usually insufficient, while space above or below the transmission member 220 is relatively large, the latter embodiment is more conducive to a compact design of the camera module.

Optionally, the transmission member 220 is provided with a first support convex portion 227 and a second support convex portion 228, and the mounting member 240 is connected to both the first support convex portion 227 and the second support convex portion 228. Optionally, the first support convex portion 227 and the second support convex portion 228 may each be provided with a recess, two ends of the mounting member 240 are respectively disposed at the recess of the first support convex portion 227 and the recess of the second support convex portion 228, and at least one end of the mounting member 240 fits with the recess in a limiting manner, so that the mounting member 240 does not move with respect to the transmission member 220. It should be noted that the mounting member 240 may rotate with respect to the transmission member 220 or may remain completely fixed with respect to the transmission member 220.

The first support convex portion 227 and second support convex portion 228 may be only used to support the mounting member 240. However, to fully utilize the structure of the second support convex portion 228, the body member 210 may be provided with a third action portion 213, where the third action portion 213 may protrude with respect to an outer peripheral surface of the body member 210, the first end of the elastic member 400 is connected to the third action portion 213, and the third action portion 213 may fit with the second support convex portion 228 in a limiting manner. The second end of the elastic member 400 is connected to the first support convex portion 227. In this embodiment, the second support convex portion 228 can be used to assist in limiting a position of the body member 210 with respect to the transmission member 220, so as to prevent excessive rotation or unstable rotation of the body member 210 due to the action of the elastic member 400 or other factors, thus allowing for more stable and reliable zooming of the camera module.

One or a plurality of elastic members 400 may be provided. When the body member 210 is an annular member, at least two elastic members 400 are provided, and the elastic members 400 are spaced apart along a circumferential direction of the body member 210. In this case, the elastic members 400 can absorb external forces at multiple positions, preventing unbalanced loading of the camera module, and thus improving reliability of the camera module during operation.

An embodiment of this application further discloses an electronic device, where the electronic device includes the camera module according to any one of the foregoing embodiments.

The electronic device disclosed in this embodiment of this application may be a smartphone, a tablet computer, an e-book reader, a wearable device (for example, a smart watch), a game console, or other devices.

## Claims

1. A camera module, comprising a photosensitive chip, a first lens barrel (100), a first lens (500), a rotating assembly (200), an elastic member (400), and a drive mechanism, wherein
the first lens barrel (100) is provided with the first lens (500), the first lens (500) is disposed opposite the photosensitive chip,
wherein
the rotating assembly (200) sleeves the first lens barrel (100), and the first lens barrel (100) is connected to the rotating assembly (200) via a first fitting convex portion and a first spiral guide slot;
the rotating assembly (200) comprises a body member (210) and a transmission member (220) that are disposed separately, a first end of the elastic member (400) is connected to the body member (210), a second end of the elastic member (400) is connected to the transmission member (220), and the drive mechanism is connected to the transmission member (220);
the drive mechanism drives, via the transmission member (220), the elastic member (400), and the body member (210) in turn, the first lens barrel (100) to move along a first direction with fitting of the first fitting convex portion and the first spiral guide slot, the first direction being a direction approaching or leaving the photosensitive chip; and
in a case that the first lens barrel (100) is subjected to an external force, the elastic member (400) makes the first lens barrel move along a direction approaching the photosensitive chip.

2. The camera module according to claim 1, wherein the body member (210) is an annular member, and the transmission member (220) and the elastic member (400) are both disposed in a circumferential direction of the body member (210).

3. The camera module according to claim 1, wherein the transmission member (220) has a third end (221) and a fourth end (222), the third end (221) and the fourth end (222) being apart from each other, and the elastic member (400) sleeves the transmission member (220).

4. The camera module according to claim 3, wherein the body member (210) is provided with a guide slot (211) and a first action portion (212), the transmission member (220) fits with the guide slot (211), the first action portion (212) is connected to the first end, and a portion of the transmission member (220) is disposed between a side wall of the guide slot (211) and the first action portion (212).

5. The camera module according to claim 3, wherein the transmission member (220) comprises a rack portion (223) and a rod portion (224), wherein the rack portion (223) is connected to the drive mechanism, the rack portion (223) is provided with a second action portion (226) at an end, and the second end is connected to the second action portion (226).

6. The camera module according to claim 1, wherein the rotating assembly (200) further comprises a mounting member (240), the mounting member (240) and the transmission member (220) are disposed separately and connected to each other, and the elastic member (400) sleeves the mounting member (240).

7. The camera module according to claim 6, wherein the transmission member (220) is an annular member.

8. The camera module according to claim 6, wherein the transmission member (220) and the elastic member (400) are arranged along a direction parallel to an optical axis of the camera module.

9. The camera module according to claim 6, wherein the transmission member (220) is provided with a first support convex portion (227) and a second support convex portion (228), the mounting member (240) is connected to both the first support convex portion (227) and the second support convex portion (228), the body member (210) is provided with a third action portion (213), the first end is connected to the third action portion (213), the third action portion (213) fits with the second support convex portion (228) in a limiting manner, and the second end is connected to the first support convex portion (227).

10. The camera module according to claim 1, wherein the body member (210) is an annular member, at least two elastic members (400) are provided, and the elastic members (400) are spaced apart along a circumferential direction of the body member (210).

11. An electronic device, **characterized by** comprising the camera module according to any one of claims 1 to 10.

## Patentansprüche

1. Ein Kameramodul, umfassend einen lichtempfindlichen Chip, einen ersten Linsentubus (100), eine erste Linse (500), eine Drehbaugruppe (200), ein elastisches Element (400) und einen Antriebsmechanismus, wobei
der erste Linsentubus (100) mit der ersten Linse (500) versehen ist, die erste Linse (500) gegenüber dem lichtempfindlichen Chip angeordnet ist,
wobei
die Drehbaugruppe (200) den ersten Linsentubus (100) umschließt und der erste Linsentubus (100) über einen ersten Eingriffsvorsprung und einen ersten spiralförmigen Führungsschlitz mit der Drehbaugruppe (200) verbunden ist;
die Drehbaugruppe (200) ein Körperelement (210) und ein Übertragungselement (220) umfasst, die getrennt angeordnet sind, ein erstes Ende des elastischen Elements (400) mit dem Körperelement (210) verbunden ist, ein zweites Ende des elastischen Elements (400) mit dem Übertragungselement (220) verbunden ist und der Antriebsmechanismus mit dem Übertragungselement (220) verbunden ist;
der Antriebsmechanismus über das Übertragungselement (220), das elastische Element (400) und das Körperelement (210) der Reihe nach den ersten Linsentubus (100) antreibt, sich durch Eingriff des ersten Eingriffsvorsprungs mit dem ersten spiralförmigen Führungsschlitz entlang einer ersten Richtung zu bewegen, wobei die erste Richtung eine Richtung ist, in der er sich dem lichtempfindlichen Chip annähert oder von diesem entfernt; und
in einem Fall, in dem der erste Linsentubus (100) einer äußeren Kraft ausgesetzt ist, das elastische Element (400) bewirkt, dass sich der erste Linsentubus entlang einer Richtung bewegt, in der er sich dem lichtempfindlichen Chip annähert.

2. Das Kameramodul nach Anspruch 1, wobei das Körperelement (210) ein ringförmiges Element ist und das Übertragungselement (220) und das elastische Element (400) beide in einer Umfangsrichtung des Körperelements (210) angeordnet sind.

3. Das Kameramodul nach Anspruch 1, wobei das Übertragungselement (220) ein drittes Ende (221) und ein viertes Ende (222) aufweist, wobei das dritte Ende (221) und das vierte Ende (222) voneinander beabstandet sind, und das elastische Element (400) das Übertragungselement (220) umschließt.

4. Das Kameramodul nach Anspruch 3, wobei das Körperelement (210) mit einem Führungsschlitz (211) und einem ersten Betätigungsabschnitt (212) versehen ist, das Übertragungselement (220) mit dem Führungsschlitz (211) zusammenwirkt, der erste Betätigungsabschnitt (212) mit dem ersten Ende verbunden ist und ein Abschnitt des Übertragungselements (220) zwischen einer Seitenwand des Führungsschlitzes (211) und dem ersten Betätigungsabschnitt (212) angeordnet ist.

5. Das Kameramodul nach Anspruch 3, wobei das Übertragungselement (220) einen Zahnstangenabschnitt (223) und einen Stangenabschnitt (224) umfasst, wobei der Zahnstangenabschnitt (223) mit dem Antriebsmechanismus verbunden ist, der Zahnstangenabschnitt (223) an einem Ende mit einem zweiten Betätigungsabschnitt (226) versehen ist und das zweite Ende mit dem zweiten Betätigungsabschnitt (226) verbunden ist.

6. Das Kameramodul nach Anspruch 1, wobei die Drehbaugruppe (200) ferner ein Montageelement (240) umfasst, das Montageelement (240) und das Übertragungselement (220) getrennt angeordnet und miteinander verbunden sind und das elastische Element (400) das Montageelement (240) umschließt.

7. Das Kameramodul nach Anspruch 6, wobei das Übertragungselement (220) ein ringförmiges Element ist.

8. Das Kameramodul nach Anspruch 6, wobei das Übertragungselement (220) und das elastische Element (400) entlang einer Richtung parallel zu einer optischen Achse des Kameramoduls angeordnet sind.

9. Das Kameramodul nach Anspruch 6, wobei das Übertragungselement (220) mit einem ersten Stützvorsprung (227) und einem zweiten Stützvorsprung (228) versehen ist, das Montageelement (240) sowohl mit dem ersten Stützvorsprung(227) als auch mit dem zweiten Stützvorsprung (228) verbunden ist, das Körperelement (210) mit einem dritten Betätigungsabschnitt (213) versehen ist, das erste Ende mit dem dritten Betätigungsabschnitt (213) verbunden ist, der dritte Betätigungsabschnitt (213) in begrenzender Weise mit dem zweiten Stützvorsprung (228) zusammenwirkt und das zweite Ende mit dem ersten Stützvorsprung (227) verbunden ist.

10. Das Kameramodul nach Anspruch 1, wobei das Körperelement (210) ein ringförmiges Element ist, mindestens zwei elastische Elemente (400) vorgesehen sind und die elastischen Elemente (400) entlang einer Umfangsrichtung des Körperelements (210) voneinander beabstandet sind.

11. Eine elektronische Vorrichtung, **dadurch gekennzeichnet, dass** sie das Kameramodul nach einem der Ansprüche 1 bis 10 umfasst.

## Revendications

1. Un module de caméra, comprenant une puce photosensible, un premier barillet d'objectif (100), une première lentille (500), un ensemble rotatif (200), un élément élastique (400) et un mécanisme d'entraînement, dans lequel
le premier barillet d'objectif (100) est pourvu de la première lentille (500), la première lentille (500) est disposée en face de la puce photosensible,
dans lequel
l'ensemble rotatif (200) entoure le premier barillet d'objectif (100), et le premier barillet d'objectif (100) est relié à l'ensemble rotatif (200) par l'intermédiaire d'une première partie convexe d'ajustement et d'une première rainure de guidage en spirale ;
l'ensemble rotatif (200) comprend un élément de corps (210) et un organe de transmission (220) qui sont disposés séparément, une première extrémité de l'élément élastique (400) est reliée à l'élément de corps (210), une deuxième extrémité de l'élément élastique (400) est reliée à l'organe de transmission (220), et le mécanisme d'entraînement est relié à l'organe de transmission (220) ;
le mécanisme d'entraînement entraîne, par l'intermédiaire de l'organe de transmission (220), de l'élément élastique (400) et de l'élément de corps (210) successivement, le premier barillet d'objectif (100) à se déplacer suivant une première direction avec l'ajustement de la première partie convexe d'ajustement et de la première rainure de guidage en spirale, la première direction étant une direction de rapprochement ou d'éloignement de la puce photosensible ; et
dans le cas où le premier barillet d'objectif (100) est soumis à une force externe, l'élément élastique (400) fait se déplacer le premier barillet d'objectif suivant une direction de rapprochement de la puce photosensible.

2. Le module de caméra selon la revendication 1, dans lequel l'élément de corps (210) est un élément annulaire, et l'organe de transmission (220) et l'élément élastique (400) sont tous deux disposés dans une direction circonférentielle de l'élément de corps (210).

3. Le module de caméra selon la revendication 1, dans lequel l'organe de transmission (220) possède une troisième extrémité (221) et une quatrième extrémité (222), la troisième extrémité (221) et la quatrième extrémité (222) étant espacées l'une de l'autre, et l'élément élastique (400) entoure l'organe de transmission (220).

4. Le module de caméra selon la revendication 3, dans lequel l'élément de corps (210) est pourvu d'une rainure de guidage (211) et d'une première partie d'actionnement (212), l'organe de transmission (220) s'ajuste à la rainure de guidage (211), la première partie d'actionnement (212) est reliée à la première extrémité, et une partie de l'organe de transmission (220) est disposée entre une paroi latérale de la rainure de guidage (211) et la première partie d'actionnement (212).

5. Le module de caméra selon la revendication 3, dans lequel l'organe de transmission (220) comprend une partie de crémaillère (223) et une partie de tige (224), dans lequel la partie de crémaillère (223) est reliée au mécanisme d'entraînement, la partie de crémaillère (223) est pourvue d'une deuxième partie d'actionnement (226) à une extrémité, et la deuxième extrémité est reliée à la deuxième partie d'actionnement (226).

6. Le module de caméra selon la revendication 1, dans lequel l'ensemble rotatif (200) comprend en outre un élément de montage (240), l'élément de montage (240) et l'organe de transmission (220) sont disposés séparément et reliés l'un à l'autre, et l'élément élastique (400) entoure l'élément de montage (240).

7. Le module de caméra selon la revendication 6, dans lequel l'organe de transmission (220) est un élément annulaire.

8. Le module de caméra selon la revendication 6, dans lequel l'organe de transmission (220) et l'élément élastique (400) sont agencés suivant une direction parallèle à un axe optique du module de caméra.

9. Le module de caméra selon la revendication 6, dans lequel l'organe de transmission (220) est pourvu d'une première partie convexe de support (227) et d'une deuxième partie convexe de support (228), l'élément de montage (240) est relié à la fois à la première partie convexe de support(227) et à la deuxième partie convexe de support (228), l'élément de corps (210) est pourvu d'une troisième partie d'actionnement (213), la première extrémité est reliée à la troisième partie d'actionnement (213), la troisième partie d'actionnement (213) s'ajuste à la deuxième partie convexe de support (228) de manière limitative, et la deuxième extrémité est reliée à la première partie convexe de support (227).

10. Le module de caméra selon la revendication 1, dans lequel l'élément de corps (210) est un élément annulaire, au moins deux éléments élastiques (400) sont prévus, et les éléments élastiques (400) sont espacés suivant une direction circonférentielle de l'élément de corps (210).

11. Un dispositif électronique, **caractérisé en ce qu'**il comprend le module de caméra selon l'une quelconque des revendications 1 à 10.
